(19) **Europäisches Patentamt**
**European Patent Office**
**Office européen des brevets**

(11) **EP 4 583 526 A1**

(12) **EUROPEAN PATENT APPLICATION**
published in accordance with Art. 153(4) EPC

(43) Date of publication:
09.07.2025 Bulletin 2025/28

(21) Application number: 23858905.5

(22) Date of filing: 30.06.2023

(51) International Patent Classification (IPC):
*H04N 23/70* (2023.01) *H04N 23/60* (2023.01)
*H04N 7/18* (2006.01)

(52) Cooperative Patent Classification (CPC):
H04N 7/18; H04N 23/60; H04N 23/65; H04N 23/70;
H04N 23/71; H04N 23/73; H04N 23/95

(86) International application number:
PCT/CN2023/104418

(87) International publication number:
WO 2024/045867 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.09.2022 CN 202211073948

(71) Applicant: Zhejiang Uniview Technologies Co.,
Ltd.
Hangzhou, Zhejiang 310051 (CN)

(72) Inventors:
• CHENG, Dan
Hangzhou, Zhejiang 310051 (CN)
• LV, Qiankun
Hangzhou, Zhejiang 310051 (CN)

(74) Representative: Micheli & Cie SA
Rue de Genève 122
Case Postale 61
1226 Genève-Thônex (CH)

(54) **CAMERA RAPID EXPOSURE METHOD AND APPARATUS, ELECTRONIC DEVICE, AND MEDIUM**

(57) The present disclosure relates to the technical field of cameras, and provides a camera rapid exposure method and apparatus, an electronic device, and a medium. The method comprises: when a camera is in a dormant state, adjusting an image acquisition frequency and an image acquisition resolution on the basis of currently measured object distance and object body volume; controlling a sensing unit in the camera, and acquiring and caching a pre-alarm image by using the adjusted image acquisition frequency and image acquisition resolution; on the basis of the brightness of a plurality frames of the pre-alarm image cached by the camera when in the dormant state, estimating the brightness and exposure factor of a first frame image after the camera has started up; and once the camera is controlled to start up, performing exposure according to the estimated brightness and exposure factor of the first frame image after the camera has started up.

Adjusting an image acquisition frequency and an image acquisition resolution based on a distance to and a volume of a measured object in case that a camera is in a sleep state — 101

Controlling a sensing unit in the camera to acquire and cache pre-alarm images using the adjusted image acquisition frequency and image acquisition resolution — 102

Estimating a brightness and an exposure factor of a first frame image after startup of the camera is completed based on brightnesses of a plurality frames of pre-alarm images cached by the camera during the sleep state — 103

Controlling the camera to expose, after the startup is completed, based on the estimated brightness and exposure factor of the first frame image after the startup of the camera is completed — 104

FIG. 1

# EP 4 583 526 A1

**Description**

CROSS-REFERENCES TO RELATED APPLICATIONS

The present application claims priority to Chinese patent Application No. 2022110739480 filed on September 02, 2022, entitled "Camera Rapid Exposure Method and Apparatus, Electronic Device, and Medium", which is incorporated herein by reference in its entirety.

FIELD

The present application relates to the field of cameras, and in particular, to a method and an apparatus for rapid exposure of camera, an electronic device, and a medium.

BACKGROUND

With the continuous development of cameras and the increasing demand for smart homes and outdoor monitoring, low-power fast-start cameras are gradually coming into view of people. Low-power fast-start cameras use passive infrared (PIR) and other sensors to detect movements of humans or animals, which wakes up the camera to start real-time monitoring.

At present, for low-power fast-start cameras, power consumption is mainly reduced by shortening the starting time though optimizing an initial image effect.

BRIEF SUMMARY

The present application provides a method and an apparatus for rapid exposure of camera, an electronic device, and a medium to solve the problem of poor power consumption reduction in low-power fast-start cameras in the related art since power consumption is mainly reduced by shortening the starting time through optimizing an initial image effect to effectively reduce power consumption of cameras.

The present application provides a method for rapid exposure of camera, including:

adjusting an image acquisition frequency and an image acquisition resolution based on a distance to and a volume of a measured object in case that a camera is in a sleep state;
controlling a sensing unit in the camera to acquire and cache pre-alarm images using the adjusted image acquisition frequency and image acquisition resolution;
estimating a brightness and an exposure factor of a first frame image after startup of the camera is completed based on brightnesses of a plurality frames of pre-alarm images cached by the camera during the sleep state; and
controlling the camera to expose, after the startup is completed, based on the estimated brightness and exposure factor of the first frame image after the startup of the camera is completed.

The present application further provides an apparatus for rapid exposure of camera, including:

an adjusting module, configured to adjust an image acquisition frequency and an image acquisition resolution based on a distance to and a volume of a measured object in case that a camera is in a sleep state;
a cache module directly connected to an output terminal of a sensing unit in a camera through an A/D converter, and configured to cache images acquired by the sensing unit in the sleep state;
a cache control module, configured to control the sensing unit in the camera to acquire pre-alarm images using an adjusted image acquisition frequency and image acquisition resolution, and output the pre-alarm images to the cache module;
an estimating module, configured to estimate a brightness and an exposure factor of a first frame image after the startup of the camera is completed based on brightnesses of a plurality frames of pre-alarm images cached by the camera during the sleep state; and
an exposing module, configured to control the camera to expose, after the startup is completed, based on the estimated brightness and exposure factor of the first frame image after the startup of the camera is completed.

The present application further provides an electronic device, including a memory, a processor, and a computer program stored in the memory and executable in the processor, and when executing the program, the processor performs any steps of the method for rapid exposure of camera as described above.

The present application further provides a non-transient computer-readable storage medium storing a computer program, and the computer program, when executed by a processor, performs any steps of the method for rapid exposure of camera as described above.

BRIEF DESCRIPTION OF THE DRAWINGS

FIG. 1 is a schematic flowchart of a method for rapid exposure of camera according to an embodiment of the present application.

FIG. 2 is a schematic structural diagram of an apparatus for rapid exposure of camera according to an embodiment of the present application.

FIG. 3 is a schematic structural diagram of an electronic device according to an embodiment of the present application.

DETAILED DESCRIPTION

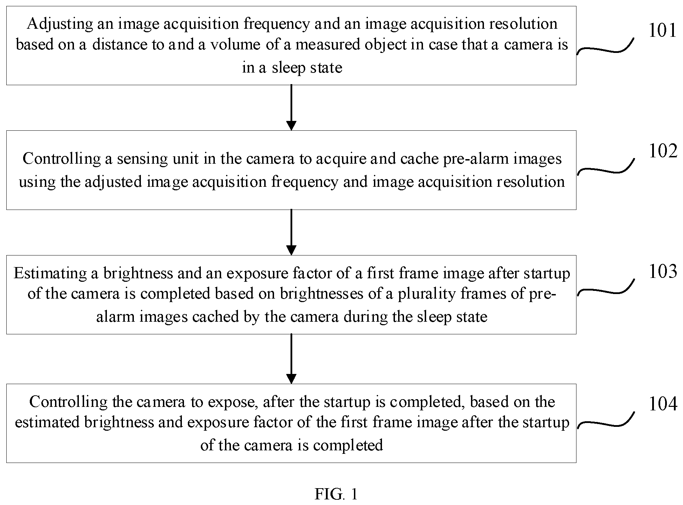

The method for rapid exposure of camera in embodiments of the present application is described below with reference to FIG. 1.

FIG. 1 is referred, which is a schematic flowchart of a method for rapid exposure of camera according to an embodiment of the present application. As shown in FIG. 1, the method for rapid exposure of camera in embodiments of the present application may include the following steps:

step 101: adjusting an image acquisition frequency and an image acquisition resolution based on a distance to and a volume of a measured object in case that a camera is in a sleep state;
step 102: controlling a sensing unit in the camera to acquire and cache pre-alarm images using the adjusted image acquisition frequency and image acquisition resolution;
step 103: estimating a brightness and an exposure factor of a first frame image after the startup of the camera is completed based on brightnesses of a plurality frames of pre-alarm images cached by the camera during the sleep state; and
step 104: controlling the camera to expose, after the startup is completed, based on estimated brightness and exposure factor of the first frame image after the startup of the camera is completed.

In step 101, the object may be at least one of a person or an animal, and the distance to and the volume of the object may be measured by a time of flight (TOF) unit in the camera.
In case that the camera is in the sleep state and the measured object is close in distance and has a large volume, the image acquisition resolution is adjusted to low resolution and the image acquisition frequency is adjusted to low frequency; if the measured object is far away and has a small volume, the image acquisition resolution is adjusted to high resolution and the image acquisition frequency is adjusted to high frequency. Therefore, as people or objects approach the camera, the image acquisition frequency and image acquisition resolution are adaptively adjusted from high to low, which may reduce camera power consumption as there is no need to constantly use higher image acquisition frequency and resolution to acquire pre-alarm images.
In step 102, the sensing unit in the camera is controlled to acquire and cache pre-alarm images using the adjusted image acquisition frequency and image acquisition resolution, which may acquire a plurality frames of pre-alarm images cached by the camera during the sleep state, and obtains the motion trajectories of humans or animals before the alarm.
The sensing unit in the camera is embedded with a storage unit of which a storage space is $T$. In an embodiment, if a data amount of cached pre-alarm images exceeds $T$, a first-in-first-out principle is used for storage, which may ensure that no insufficient memory occurs in the storage space of the storage unit .
It should be noted that the image acquisition resolution of the pre-alarm images in the cache is lower than an actual working resolution after the startup of the camera is completed.
In step 103, the exposure factor may include: shutter and gain.
The brightness and the exposure factor of the first frame image after the startup of the camera is completed may be estimated based on brightness of the plurality frames of pre-alarm images cached by the camera during the sleep state, which allows the camera to obtain, before the startup is completed, the brightness and the exposure factor of the first frame image after the startup of the camera is completed.
In step 104, since the camera has already obtained, before the startup is completed, the estimated brightness and exposure factor of the first frame image after the startup of the camera is completed, the camera may directly use the estimated brightness and exposure factor of the first frame image after the startup of the camera is completed for exposure, which may greatly shorten the camera exposure time and reduce camera power consumption.

In the embodiments of the present application, on the one hand, the image acquisition frequency and the image acquisition resolution are adjusted based on the distance to and the volume of the measured object in case that the camera is in sleep state; and the sensing unit in the camera is controlled to acquire and cache pre-alarm images using the adjusted image acquisition frequency and image acquisition resolution. Due to the adaptive adjustment of image acquisition frequency and image acquisition resolution, there is no need to constantly use higher image acquisition frequency and image acquisition resolution to acquire pre-alarm images, which may reduce camera power consumption. On the other hand, the brightness and the exposure factor of the first frame image after the startup of the camera is completed are estimated based on the brightness of the plurality frames of pre-alarm images cached by the camera during the sleep state. That is, the camera has already obtained, before the startup is completed, the estimated brightness and exposure factor of the first frame image after the startup of the camera is completed; and the camera is controlled to expose, after the startup is completed, based on the estimated brightness and exposure factor of the first frame image after the startup of the camera is completed. Since the camera has already obtained, before the startup is completed, the estimated brightness and exposure factor of the first frame image after the startup of the camera is completed, the camera may directly use the estimated brightness and exposure factor of the first frame image after the startup of the camera is completed for exposure, which may greatly shorten the camera exposure time and reduce camera power consumption.

In an embodiment, step 101 may include the following sub steps:

step 1011: calculating a proportion of the volume of the measured object in an entire picture;

step 1012: adjusting the image acquisition resolution based on the proportion of the volume of the measured object in the entire picture and the distance to the measured object; and

step 1013: adjusting the image acquisition frequency based on the distance to the measured object.

In step 1011, the proportion of the volume of the measured object in the entire picture may be calculated using expression (1):

$$Prop = \frac{PV}{W \times H}, (1)$$

where *PV* represents the volume of the measured object, *W* and *H* represent a width and a height of the entire picture respectively, and *Prop* represents the proportion of the volume of the measured object in the entire picture.

In step 1012, the image acquisition resolution may be calculated using expression (2):

$$Res(L, Prop) = \frac{(log_y Prop) + A}{z \times x^L} \times W \times H, (2)$$

where *x, y, z,* and *A* are all constants, $0 < x < 1, 0 < y < 1, L$ represents the distance to the measured object, and *Res(L, Prop)* represents the image acquisition resolution.

In step 1013, the image acquisition frequency may be calculated using expression (3):

$$Fre(L) = \begin{cases} \varphi\left(k^{(L-S2)} + a\right) & \frac{L-S2}{S1-S2} < t1, a \geq 1 \\ \varphi\left(m \times log2^{n \times (L-S2)+c} + b\right) & \frac{L-S2}{S1-S2} > t1, b \geq 1 > a, c > 1 \end{cases}, (3)$$

where *S*1 and *S*2 are distance thresholds, S1 > L > S2, a, b, c, m, n, k and t1 are constants, k > 1, m > 0, n > 0, t1 > 0, $\varphi()$ represents a rounding function, and *Fre(L)* represents the image acquisition frequency.

In the embodiments of the present application, the image acquisition resolution may be calculated based on the proportion of the volume of the measured object in the entire picture and the distance to the measured object, and the image acquisition frequency may be calculated based on the distance to the measured object. Since the image acquisition frequency and image acquisition resolution are adaptively adjusted, there is no need to constantly use high image acquisition frequency and image acquisition resolution to acquire pre-alarm images, which not only reduces camera power consumption, but also greatly saves storage space.

In an embodiment, in step 103, determining the brightness of the first frame image after the startup of the camera is completed based on the brightness of the plurality frames of pre-alarm images cached by the camera during the sleep state may include the following sub steps:

step 1031: obtaining a brightness of a last frame pre-alarm image among the plurality frames of pre-alarm images cached by the camera during the sleep state in case that the startup of the camera is not completed; and

step 1032: determining the brightness of the last frame pre-alarm image as the brightness of the first frame image after the startup of the camera is completed.

In step 1031, the startup of the camera is not completed refers to a stage from the startup of the camera begins to the startup is completed. The startup of the camera means that the camera enters a wake-up state from the sleep state.

The brightness of the last frame pre-alarm image among the plurality frames of pre-alarm images cached during sleep state is pre-obtained when the startup of the camera is not completed. The brightness of the last frame pre-alarm image may reflect an ambient brightness.

In step 1032, since the brightness of the last frame pre-alarm image may reflect the ambient brightness, the brightness of the last frame pre-alarm image is determined as the brightness of the first frame image after the startup of the camera is completed, which may quickly estimate the brightness of the first frame image after the startup of the camera is completed.

In the embodiments of the present application, by quickly estimating the brightness of the first frame image after the startup of the camera is completed, images may be rapidly exposed after the startup of the camera is completed.

In an embodiment, in step 103, estimating the exposure factor of the first frame image after the startup of the camera is completed based on the brightness of the plurality frames of pre-alarm images cached by the camera during the sleep state may include the following sub steps:

step 201: obtaining a first brightness and a first exposure factor of a last frame image when last time the camera is in a wake-up state, and calculating a first exposure value based on the first exposure factor;

step 202: counting a quantity of first pixels with brightnesses lower than a first brightness threshold in the last frame image when last time the camera is in the wake-up state and a quantity of second pixels with brightnesses lower than the first brightness threshold in a first frame image when currently the camera enters a wake-up state, and determining a ratio of a difference between the quantity of second pixels and the quantity of first pixels to the quantity of second pixels as an over-dark-area ratio factor;

step 203: counting a quantity of third pixels with brightnesses higher than a second brightness threshold in the last frame image when last time the camera is in the wake-up state and a quantity of fourth pixels with brightnesses higher than the second brightness threshold in a first frame image when currently the camera enters a wake-up state, and determining a ratio of a difference between the quantity of fourth pixels and the quantity of third pixels to the quantity of fourth pixels as an over-light-area ratio factor, where the second brightness threshold is greater than the first brightness threshold;

step 204: obtaining a second brightness of the first frame image when currently the camera enters the wake-up state in case that the over-dark-area ratio factor is not greater than an over-dark-area ratio threshold and the over-light-area ratio factor is not greater than an over-light-area ratio threshold;

step 205: determining a ratio of an absolute value of a difference between the first brightness and the second brightness to the second brightness as a brightness difference ratio;

step 206: determining the first exposure value as a second exposure value of the first frame image after the startup of the camera is completed in case that the brightness difference ratio is less than or equal to a brightness difference ratio threshold; and

step 207: determining the exposure factor of the first frame image after the startup of the camera is completed based on the second exposure value.

In step 201, the first brightness $R_{pre}$, shutter $SV_{pre}$, and gain $GV_{pre}$ of the last frame image when last time the camera is in the wake-up state are obtained. The first exposure factor includes the shutter $SV_{pre}$ and gain $GV_{pre}$, and the first exposure value is calculated using expression (4):

$$EV_{pre} = SV_{pre} \times GV_{pre}, (4)$$

where $EV_{pre}$ represents the first exposure value.

In step 202, the over-dark-area ratio factor may be calculated using expression (5):

$$D_{ratio} = \frac{D_{countcur} - D_{countpre}}{D_{countcur}}, (5)$$

where $D_{countpre}$ represents the quantity of first pixels with brightnesses lower than the first brightness threshold in the last frame image when last time the camera is in the wake-up state, $D_{countcur}$ represents the quantity of second pixels with brightnesses lower than the first brightness threshold in the first frame image when currently the camera enters the wake-up state, and $D_{ratio}$ represents the over-dark-area ratio factor.

In step 203, the over-light-area ratio factor may be calculated using expression (6):

$$L_{ratio} = \frac{L_{countcur} - L_{countpre}}{L_{countcur}}, (6)$$

where $L_{countpre}$ represents the quantity of third pixels with brightnesses higher than the second brightness threshold in the last frame image when last time the camera is in the wake-up state, $L_{countcur}$ represents the quantity of fourth pixels with brightnesses higher than the second brightness threshold in the first frame image when currently the camera enters the wake-up state, $L_{ratio}$ represents the over-light-area ratio factor, and the second brightness threshold is greater than the first brightness threshold.

In step 204, the second brightness $R_{cur}$ of the first frame when currently the camera enters the wake-up state is obtained in case that the over-dark-area ratio factor $D_{ratio}$ is not greater than the over-dark-area ratio threshold $DThr_{ratio}$ and the over-light-area ratio factor $L_{ratio}$ is not greater than the over-light-area ratio threshold $LThr_{ratio}$.

In step 205, the brightness difference ratio is calculated using expression (7):

$$\Delta R = \frac{|R_{pre} - R_{cur}|}{R_{cur}}, (7)$$

where $\Delta R$ represents the brightness difference ratio.

In step 206, when the brightness difference ratio $\Delta R$ is less than or equal to the brightness difference ratio threshold $R_{th}$, it indicates that the ambient brightness change is small. The first exposure value $EV_{pre}$ of the last frame image when last time the camera is in the wake-up state may be determined as the second exposure value $EV_{cur2}$ of the first frame image after the startup of the camera is completed, that is, $EV_{cur2} = EV_{pre}$.

In step 207, the exposure factor of the first frame image after the startup of the camera is completed is accurately calculated based on the second exposure value $EV_{cur2}$ of the first frame image after the startup of the camera is completed, namely the shutter $SV_{cur2}$ and gain $GV_{cur2}$.

In the embodiments of the present application, when the ambient brightness change is small, the first exposure value of the last frame image when last time the camera is in the wake-up state is taken as the second exposure value of the first frame image after the startup of the camera is completed, which may quickly calculate the exposure factor of the first frame image after the startup of the camera is completed, not only shorten the camera exposure time and reduce power consumption, but also ensure the brightness stability of the first frame image after the startup of the camera is completed.

In an embodiment, in step 103, estimating the exposure factor of the first frame image after the startup of the camera is completed based on the brightness of the plurality frames of pre-alarm images cached by the camera during the sleep state further includes:

in case that the over-dark-area ratio factor is greater than the over-dark-area ratio threshold, determining a product of the first exposure value and a first preset coefficient as a third exposure value of the first frame image after the startup of the camera is completed; and determining the exposure factor of the first frame image after the startup of the camera is completed based on the third exposure value.

In an embodiment, when $D_{ratio} > DThr_{ratio}$, the third exposure may be calculated using expression (8):

$$EV_{cur3} = (X + Y) \times EV_{pre}, (8)$$

where $EV_{cur3}$ represents the third exposure value, $X$ = 0.5, and $Y$ = 1.

Then, the exposure factor of the first frame image after the startup of the camera is completed may be accurately calculated based on the third exposure $EV_{cur3}$ of the first frame image after the startup of the camera is completed, namely the shutter $SV_{cur3}$ and gain $GV_{cur3}$.

In case that the over-dark-area ratio factor is greater than the over-dark-area ratio threshold, it indicates that there are relatively large quantity of first pixels with brightnesses lower than the first brightness threshold in the last frame when last time the camera is in the wake-up state, and the exposure value needs to be increased.

The product of the first exposure value and the first preset coefficient greater than 1 is determined as the third exposure value of the first frame image after the startup of the camera is completed. That is, the third exposure value may be obtained by moderately increasing the exposure value based on the first exposure value.

In the embodiments of the present application, in case that the over-dark-area ratio factor is greater than the dark area ratio threshold, the third exposure value may be obtained by moderately increasing the exposure value based on the first exposure value, which may not only shorten the camera exposure time and reduce power consumption, but also ensure the brightness stability of the first frame image after the startup of the camera is completed.

In an embodiment, in step 103, estimating the exposure factor of the first frame image after the startup of the camera is completed based on the brightness of the plurality frames of pre-alarm images cached by the camera during the sleep state further includes:

in case that the over-light-area ratio factor is greater than the over-light-area ratio threshold, determining a product of the first exposure value and a second preset coefficient as a fourth exposure value of the first frame image after the startup of the camera is completed, where the second preset coefficient is less than 1; and determining the exposure factor of the first frame image after the startup of the camera is completed based on the fourth exposure value.

In an embodiment, when $L_{ratio} > LThr_{ratio}$, the third exposure value may be calculated using expression (9):

$$EV_{cur4} = Z \times EV_{pre}, (9)$$

where $EV_{cur4}$ represents the fourth exposure value, and Z = 0.5.

Then, the exposure factor of the first frame image after the startup of the camera is completed may be accurately calculated based on the fourth exposure $EV_{cur4}$ of the first frame image after the startup of the camera is completed, namely the shutter $SV_{cur4}$ and gain $GV_{cur4}$.

In case that the over-light-area ratio factor is greater than the over-light-area ratio threshold, it indicates that there are relatively large quantity of third pixels with brightnesses higher than the second brightness threshold of the last frame when last time the camera is in the wake-up state, and the exposure value needs to be reduced.

The product of the first exposure value and the second preset coefficient less than 1 is determined as the fourth exposure value of the first frame image after the startup of the camera is completed. That is, the fourth exposure value may be obtained by moderately reducing the exposure value based on the first exposure value.

In the embodiments of the present application, in case that the over-light-area ratio factor is greater than the over-light-area ratio threshold, the fourth exposure value may be obtained by moderately reducing the exposure value based on the first exposure value, which may not only shorten the camera exposure time and reduce power consumption, but also ensure the brightness stability of the first frame image after the startup of the camera is completed.

In an embodiment, in step 103, estimating the exposure factor of the first frame image after the startup of the camera is completed based on the brightness of the plurality frames of pre-alarm images cached by the camera during the sleep state further includes:

in case that the brightness difference ratio is greater than the brightness difference ratio threshold, calculating a fifth exposure value of the first frame image when currently the camera enters the wake-up state based on the first exposure value, the brightness difference ratio, and a correction coefficient value; and determining the exposure factor of the first frame image after the startup of the camera is completed based on the fifth exposure value.

In an embodiment, if the brightness difference ratio is greater than the brightness difference ratio threshold, that is, if the ambient brightness changes significantly, the exposure factor needs to be recalculated. The positive and negative relationship between $\frac{Rpre - Rcur}{Rcur}$ and $R_{th}$ may indicate the trend of ambient brightness changes, and the fifth exposure may be calculated using expression (10):

$$EV_{cur5} = EV_{pre} +/- \Delta R * K * EV_{pre}, (10)$$

where $EV_{cur5}$ represents the fifth exposure value, and $K$ represents the correction coefficient value.

Then, the exposure factor, namely the shutter $SV_{cur5}$ and gain $GV_{cur5}$ of the first frame image after the startup of the camera is completed may be accurately calculated based on the fifth exposure value $EV_{cur5}$ of the first frame image after the startup of the camera is completed.

In the embodiments of the present application, in case that the ambient brightness changes significantly, if the first brightness is greater than the second brightness, the environment changes from bright to dark, it is necessary to increase exposure value based on the first exposure value to obtain the fifth exposure value. The increased exposure value is the product of the first exposure value, the brightness difference ratio, and the correction coefficient value. If the first brightness is lower than the second brightness, the environment changes from dark to bright, it is necessary to reduce the exposure value based on the first exposure value to obtain the fifth exposure value. The reduced exposure value is the product of the first exposure value, the brightness difference ratio, and the correction coefficient value, which may not only shorten the camera exposure time and reduce power consumption, but also ensure the brightness stability of the first frame image after the startup of the camera is completed.

In an embodiment, in step 103, estimating the exposure factor of the first frame image after the startup of the camera is completed based on the brightness of the plurality frames of pre-alarm images cached by the camera during the sleep state further includes:

step 301: determining, when the camera starts, brightnesses of a preset quantity of pre-alarm images among the plurality frames of pre-alarm images cached by the camera during the sleep state;

step 302: calculating differences between the brightnesses of the preset quantity of pre-alarm images and the brightness of the first frame image after the startup of the camera is completed; and

step 303: determining an exposure factor of a first pre-alarm image in the preset quantity of pre-alarm images as the exposure factor of the first frame image after the startup of the camera is completed, where a difference between the brightness of the first pre-alarm image and the brightness of the first frame image after the startup of the camera is completed is less than a preset threshold.

In step 301, the shutter and gain is set to level M, which applies to partial image frames cached pre-alarm. In an embodiment, the preset quantity of pre-alarm images among the plurality frames of pre-alarm images cached by the camera during the sleep state may be last N frames of images among the plurality frames of pre-alarm images cached by the camera during the sleep state. When the camera starts, these N frames of images are sent to an image signal processor (ISP) for brightness statistics R to obtain the brightnesses of these N frames of images.

It should be noted that the preset level for shutter and gain is level 10, and N frames of images are 20 frames of images.

In step 302, brightnesses of N frames of images ($R_1$, $R_2$, $R_3$, $R_4 \cdots R_{NI}$) are traversed , the brightness of each frame among the N frames of images is compared with the brightness of the first frame image $R_{cur}$ after startup, and a brightness difference is calculated.

In step 303, in case that the brightness difference is less than a certain threshold Thr, the shutter $SV_{cur}$ and gain $GV_{cur}$ corresponding to the brightness of the retrieved $R_i$ frame of image is directly taken as the exposure factor of the first frame image after the startup of the camera is completed, and $R_i$ frame of image is the first pre-alarm image.

In the embodiments of the present application, among the preset quantity of pre-alarm images among the plurality frames of pre-alarm images cached by the camera during the sleep state, the exposure factor of the pre-alarm image that is closer in brightness to the first frame image after the startup of the camera is completed is determined as the exposure factor of the first frame image after the startup of the camera is completed, which may not only shorten the camera exposure time and reduce power consumption, but also ensure the brightness stability of the first frame image after the startup of the camera is completed.

In an embodiment, in step 103, estimating the exposure factor of the first frame image after the startup of the camera is completed based on the brightness of the plurality frames of pre-alarm images cached by the camera during the sleep state further includes:

determining an exposure factor of the last frame pre-alarm image among the plurality frames of pre-alarm images cached by the camera during the sleep state as an exposure factor of the first frame image after the startup of the camera is completed, where the brightnesses of the plurality frames of pre-alarm images are adjusted based on an actual ambient brightness for exposure.

In an embodiment, a basic exposure adjustment function unit is integrated into the sensing unit of the camera, which directly adjusts the exposure based on the actual ambient brightness during the caching stage. Determining the exposure factor of the last frame pre-alarm image among the plurality frames of pre-alarm images cached by the camera during the sleep state as the exposure factor of the first frame image after the startup of the camera is completed may quickly obtain the exposure factor of the first frame image after the startup of the camera is completed.

In the embodiments of the present application, the exposure factor of the last frame pre-alarm image among the plurality frames of pre-alarm images cached by the camera during the sleep state is determined as the exposure factor of the first frame image after the startup of the camera is completed, which may not only shorten the camera exposure time and reduce power consumption, but also ensure the brightness stability of the first frame image after the startup of the camera is completed.

In an embodiment, the method further includes:

switching a state of the camera based on the distance to the measured object, where the state of the camera includes the sleep state, the wake-up state, and a fully-power-off state; and

in case that the camera is in the sleep state, controlling a main control unit in the camera to switch to a power-off state and the sensing unit in the camera to switch to a power-on state;

in case that the camera is in the wake-up state, controlling a main control unit in the camera to switch to a power-on state and the sensing unit in the camera to switch to the power-on state; or

in case that the camera is in the fully-power-off state, controlling a main control unit in the camera to switch to a power-off state and the sensing unit in the camera to switch to the power-off state.

In an embodiment, the state of the camera is firstly switched based on the distance to the measured object, where the state of the camera includes the sleep state, the wake-up state, and the fully-power-off state, and the state of the main control unit and/or sensing unit in the camera is controlled based on the state of the camera.

For example, in case that the distance to the measured object is less than or equal to a distance threshold S1 and greater than a distance threshold S2, the state of the camera is switched to the sleep state, the main control unit in the camera is switched to the power-off state, and the sensing unit in the camera is switched to the power-on state. Compared with the traditional low-power fast-start camera where the main control chip is still in operation and consumes more power when in the sleep state, while in the embodiments of the present application, the main control unit in the camera is switched to power-off state when the camera is in the sleep state, which may reduce power consumption.

In case that the distance to the measured object is greater than the distance threshold S1, that is, when a person or animal is detected to be far away, the camera is switched to the fully-power-off state, the main control unit in the camera is switched to the power-off state, and the sensing unit in the camera is switched to the power-off state, which may further reduce power consumption.

In case that the distance to the measured object is greater than the distance threshold S2, that is, when a person or animal is detected to be close, the state of the camera is switched to the wake-up state, the main control unit in the camera is switched to the power-on state, and the sensing unit in the camera is switched to the power-on state.

In the embodiments of the present application, the main control unit in the camera is switched to the power-off state when the camera is in the sleep state, which may reduce power consumption. Moreover, when the camera is switched to the fully-power-off state, the main control unit in the camera is switched to the power-off state and the sensing unit in the camera is switched to the power-off state, which may further reduce power consumption.

Below is a description of an apparatus for rapid exposure of camera provided in the present application. The apparatus for rapid exposure of camera described below may be referenced to the method for rapid exposure of camera described above.

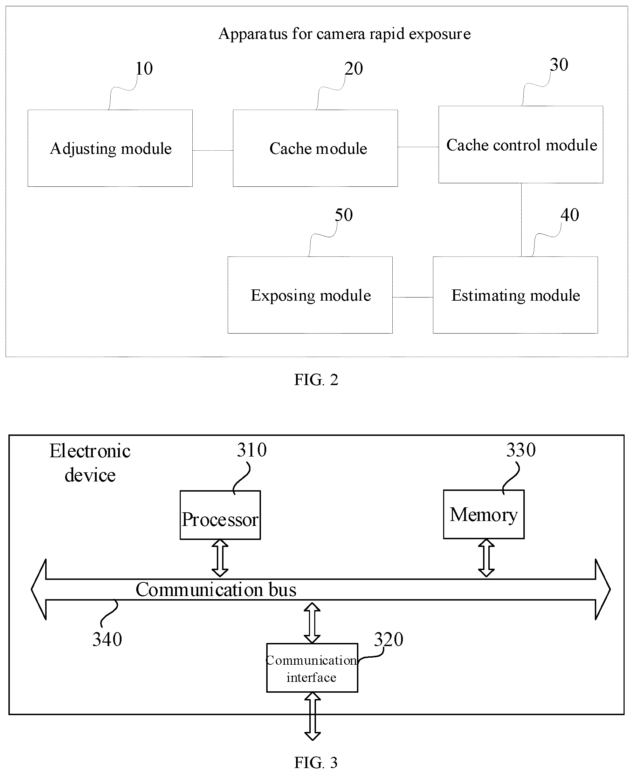

FIG. 2 is referred, which is a schematic structural diagram of an apparatus for rapid exposure of camera according to an embodiment of the present application. As shown in FIG. 2, the apparatus for rapid exposure of camera according to an embodiment of the present application may include:

an adjusting module 10, configured to adjust an image acquisition frequency and an image acquisition resolution based on a distance to and a volume of a measured object in case that a camera is in a sleep state;

a cache module 20, directly connected to an output terminal of a sensing unit in a camera through an A/D converter, and configured to cache images acquired by the sensing unit in the sleep state;

a cache control module 30, configured to control the sensing unit in the camera to acquire pre-alarm images using an adjusted image acquisition frequency and image acquisition resolution, and output the pre-alarm images to the cache module;

an estimating module 40, configured to estimate a brightness and an exposure factor of a first frame image after the startup of the camera is completed based on brightnesses of a plurality frames of pre-alarm images cached by the camera during the sleep state; and

an exposing module 50, configured to control the camera to expose, after the startup is completed, based on the estimated brightness and exposure factor of the first frame image after the startup of the camera is completed.

In an embodiment, the adjusting module 10 is further configured to:

calculate a proportion of the volume of the measured object in an entire picture;

adjust the image acquisition resolution based on the proportion of the volume of the measured object in the entire picture and the distance to the measured object; and

adjust the image acquisition frequency based on the distance to the measured object.

In an embodiment, the estimating module 40 is further configured to:

obtain a brightness of a last frame pre-alarm image among the plurality frames of pre-alarm images cached by the camera during the sleep state in case that startup of the camera is not completed; and

determine the brightness of the last frame pre-alarm image as the brightness of the first frame image after the startup of the camera is completed.

In an embodiment, the estimating module 40 is further configured to:

obtain a first brightness and a first exposure factor of a last frame image when last time the camera is in a wake-up state, and calculate a first exposure value based on the first exposure factor;

count a quantity of first pixels with brightnesses lower than a first brightness threshold in the last frame image when last time the camera is in the wake-up state and a quantity of second pixels with brightnesses lower than the first brightness threshold in a first frame image when currently the camera enters a wake-up state, and determine a ratio of a difference between the quantity of second pixels and the quantity of first pixels to the quantity of second pixels as an over-dark-area ratio factor;

count a quantity of third pixels with brightnesses higher than a second brightness threshold in the last frame image when last time the camera is in the wake-up state and a quantity of fourth pixels with brightnesses higher than the second brightness threshold in a first frame image when currently the camera enters a wake-up state, and determine a ratio of a difference between the quantity of fourth pixels and the quantity of third pixels to the quantity of fourth pixels as an over-light-area ratio factor, where the second brightness threshold is greater than the first brightness threshold;

obtain a second brightness of the first frame image when currently the camera enters the wake-up state in case that the over-dark-area ratio factor is not greater than an over-dark-area ratio threshold and the over-light-area ratio factor is not greater than an over-light-area ratio threshold;

determine a ratio of an absolute value of a difference between the first brightness and the second brightness to the second brightness as a brightness difference ratio;

determine the first exposure value as a second exposure value of the first frame image after the startup of the camera is completed in case that the brightness difference ratio is less than or equal to a brightness difference ratio threshold; and

determine the exposure factor of the first frame image after the startup of the camera is completed based on the second exposure value.

In an embodiment, the estimating module 40 is further configured to:

in case that the over-dark-area ratio factor is greater than the over-dark-area ratio threshold, determine a product of the first exposure value and a first preset coefficient as a third exposure value of the first frame image after the startup of the camera is completed, where the first preset coefficient is greater than 1; and

determine the exposure factor of the first frame image after the startup of the camera is completed based on the third exposure value.

In an embodiment, the estimating module 40 is further configured to:

in case that the over-light-area ratio factor is greater than the over-light-area ratio threshold, determine a product of the first exposure value and a second preset coefficient as a fourth exposure value of the first frame image after the camera startup completes, where the second preset coefficient is less than 1; and

determining an exposure factor of the first frame image after the startup of the camera is completed based on the fourth exposure value.

In an embodiment, the estimating module 40 is further configured to:

in case that the brightness difference ratio is greater than the brightness difference ratio threshold, calculate a fifth exposure value of the first frame image when currently the camera enters the wake-up state based on the first exposure value, the brightness difference ratio, and a correction coefficient value; and

determine the exposure factor of the first frame image after the startup of the camera is completed based on the fifth exposure value.

In an embodiment, the estimating module 40 is further configured to:

determine brightnesses of a preset quantity of pre-alarm images among the plurality frames of pre-alarm images cached by the camera during the sleep state when the camera starts;

calculate differences between the brightnesses of the preset quantity of pre-alarm images and the brightness of the first frame image after the startup of the camera is completed; and

determine an exposure factor of a first pre-alarm image in the preset quantity of pre-alarm images as the exposure factor of the first frame image after the startup of the camera is completed, where a difference between the brightness of the first pre-alarm image and the brightness of the first frame image after the startup of the camera is completed is less than a preset threshold.

In an embodiment, the estimating module 40 is further configured to:
determine an exposure factor of a last frame pre-alarm image among the plurality frames of pre-alarm images cached by the camera during the sleep state as the exposure factor of the first frame image after the startup of the camera is completed, where the brightnesses of the plurality frames of pre-alarm images are adjusted based on an actual ambient brightness for exposure.

In an embodiment, the apparatus further includes a switching module, where the switching module is configured to:

switch a state of the camera based on the distance to the measured object, where the state of the camera includes the sleep state, the wake-up state, and a fully-power-off state; and

in case that the camera is in the sleep state, control a main control unit in the camera to switch to a power-off state and the sensing unit in the camera to switch to a power-on state;

in case that the camera is in the wake-up state, control a main control unit in the camera to switch to a power-on state and the sensing unit in the camera to switch to the power-on state; or

in case that the camera is in the fully-power-off state, control a main control unit in the camera to switch to a power-off state and the sensing unit in the camera to switch to the power-off state.

FIG. 3 is a schematic structural diagram of an electronic device according to an embodiment of the present application. As shown in FIG. 3, the electronic device may include: a processor 310, a communication interface 320, a memory 330, and a communication bus 340, where the processor 310, the communication interface 320, and the memory 330 communicate with each other through the communication bus 340. The processor 310 may call logical instructions in the memory 330 to perform a method for rapid exposure of camera, which includes:

adjusting an image acquisition frequency and an image acquisition resolution based on a distance to and a volume of a measured object in case that a camera is in a sleep state;

controlling a sensing unit in the camera to acquire and cache pre-alarm images using the adjusted image acquisition frequency and image acquisition resolution;

estimating a brightness and an exposure factor of a first frame image after the startup of the camera is completed based on brightnesses of a plurality frames of pre-alarm images cached by the camera during the sleep state; and

controlling the camera to expose, after the startup is completed, based on the estimated brightness and exposure factor of the first frame image after the startup of the camera is completed.

In addition, the logical instructions in the above-mentioned memory 330 may be implemented in the form of software functional units and stored in a computer readable storage medium when sold or used as independent products. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or a compact disk.

The present application further provides a computer program product including a computer program stored on a non-transient computer-readable storage medium, the computer program including program instructions, and when the program instructions are executed by a computer, the computer is capable of performing the method for rapid exposure of camera provided by the above method, which includes:

adjusting an image acquisition frequency and an image acquisition resolution based on a distance to and a volume of a measured object in case that a camera is in a sleep state;

controlling a sensing unit in the camera to acquire and cache pre-alarm images using the adjusted image acquisition frequency and image acquisition resolution;

estimating a brightness and an exposure factor of a first frame image after the startup of the camera is completed based on brightnesses of a plurality frames of pre-alarm images cached by the camera during the sleep state; and

controlling the camera to expose, after the startup is completed, based on the estimated brightness and exposure factor of the first frame image after the startup of the camera is completed.

The present application further provides a non-transient computer-readable storage medium storing a computer program. The computer program, when executed by a processor, performs the method for rapid exposure of camera provided by the above method, which includes:

adjusting an image acquisition frequency and an image acquisition resolution based on a distance to and a volume of a measured object in case that a camera is in a sleep state;

controlling a sensing unit in the camera to acquire and cache pre-alarm images using the adjusted image acquisition frequency and image acquisition resolution;
estimating a brightness and an exposure factor of a first frame image after the startup of the camera is completed based on brightnesses of a plurality frames of pre-alarm images cached by the camera during the sleep state; and controlling the camera to expose, after the startup is completed, based on the estimated brightness and exposure factor of the first frame image after the startup of the camera is completed.

The apparatus embodiments described above are only schematic, where the units described as separate components may be or may not be physically separated, and the components displayed as units may be or may not be physical units, that is, they may be located in one place or distributed across a plurality of network units. Some or all of the modules may be selected according to actual needs to achieve the purpose of the embodiments of the present application. Those skilled in the art may understand and perform without creative effort.

Through the description of the above implementation, those skilled in the art may clearly understand that each implementation may be implemented through software and necessary general hardware platforms, and it may also be implemented through hardware. Based on such understanding, the technical solutions of the present application in essence or a part of the technical solutions that contributes to the prior art may be embodied in the form of a software product, which may be stored in computer-readable storage media such as ROM/RAM, magnetic disks, optical disks, etc., including several instructions to enable a computer device (which may be a personal computer, server, or network device, etc.) to perform the methods described in each embodiment or certain parts of the embodiments.

Finally, it should be noted that the above embodiments are only used to illustrate the solution of the present application and not to limit it; although the present application has been described in detail in conjunction with the aforementioned embodiments, those skilled in the art should understand that they may still modify the solutions described in each of the aforementioned embodiments, or equivalently replace some of the technical features; and these modifications or substitutions do not deviate from the scope of the corresponding solutions of the embodiments of the present application.

**Claims**

1.  A method for rapid exposure of camera, comprising:

    adjusting an image acquisition frequency and an image acquisition resolution based on a distance to and a volume of a measured object in case that a camera is in a sleep state;
    controlling a sensing unit in the camera to acquire and cache pre-alarm images using the adjusted image acquisition frequency and image acquisition resolution;
    estimating a brightness and an exposure factor of a first frame image after startup of the camera is completed based on brightnesses of a plurality frames of pre-alarm images cached by the camera during the sleep state; and controlling the camera to expose, after the startup is completed, based on the estimated brightness and exposure factor of the first frame image after the startup of the camera is completed.

2.  The method for rapid exposure of camera of claim 1, wherein adjusting the image acquisition frequency and the image acquisition resolution based on the distance to and the volume of the measured object comprises:

    calculating a proportion of the volume of the measured object in an entire picture;
    adjusting the image acquisition resolution based on the proportion of the volume of the measured object in the entire picture and the distance to the measured object; and
    adjusting the image acquisition frequency based on the distance to the measured object.

3.  The method for rapid exposure of camera of claim 1, wherein determining the brightness of the first frame image after the startup of the camera is completed based on the brightnesses of the plurality frames of pre-alarm images cached by the camera during the sleep state comprises:

    obtaining a brightness of a last frame pre-alarm image among the plurality frames of pre-alarm images cached by the camera during the sleep state in case that the startup of the camera is not completed; and
    determining the brightness of the last frame pre-alarm image as the brightness of the first frame image after the startup of the camera is completed.

4.  The method for rapid exposure of camera of any of claims 1 to 3, wherein determining the exposure factor of the first frame image after the startup of the camera is completed based on the brightnesses of the plurality frames of pre-alarm images cached by the camera during the sleep state comprises:

obtaining a first brightness and a first exposure factor of a last frame image when last time the camera is in a wake-up state, and calculating a first exposure value based on the first exposure factor;

counting a quantity of first pixels with brightnesses lower than a first brightness threshold in the last frame image when last time the camera is in the wake-up state and a quantity of second pixels with brightnesses lower than the first brightness threshold in a first frame image when currently the camera enters a wake-up state, and determining a ratio of a difference between the quantity of second pixels and the quantity of first pixels to the quantity of second pixels as an over-dark-area ratio factor;

counting a quantity of third pixels with brightnesses higher than a second brightness threshold of the last frame image when last time the camera is in the wake-up state and a quantity of fourth pixels with brightnesses higher than the second brightness threshold in a first frame image when currently the camera enters a wake-up state, and determining a ratio of a difference between the quantity of fourth pixels and the quantity of third pixels to the quantity of fourth pixels as an over-light-area ratio factor, wherein the second brightness threshold is greater than the first brightness threshold;

obtaining a second brightness of the first frame image when currently the camera enters the wake-up state in case that the over-dark-area ratio factor is not greater than an over-dark-area ratio threshold and the over-light-area ratio factor is not greater than an over-light-area ratio threshold;

determining a ratio of an absolute value of a difference between the first brightness and the second brightness to the second brightness as a brightness difference ratio;

determining the first exposure value as a second exposure value of the first frame image after the startup of the camera is completed in case that the brightness difference ratio is less than or equal to a brightness difference ratio threshold; and

determining the exposure factor of the first frame image after the startup of the camera is completed based on the second exposure value.

5. The method for rapid exposure of camera of claim 4, wherein the method further comprises:

in case that the over-dark-area ratio factor is greater than the over-dark-area ratio threshold, determining a product of the first exposure value and a first preset coefficient as a third exposure value of the first frame image after the startup of the camera is completed, wherein the first preset coefficient is greater than 1; and determining the exposure factor of the first frame image after the startup of the camera is completed based on the third exposure value.

6. The method for rapid exposure of camera of claim 4, wherein the method further comprises:

in case that the over-light-area ratio factor is greater than the over-light-area ratio threshold, determining a product of the first exposure value and a second preset coefficient as a fourth exposure value of the first frame image after the startup of the camera is completed, wherein the second preset coefficient is less than 1; and determining the exposure factor of the first frame image after the startup of the camera is completed based on the fourth exposure value.

7. The method for rapid exposure of camera of claim 4, wherein the method further comprises:

in case that the brightness difference ratio is greater than the brightness difference ratio threshold, calculating a fifth exposure value of the first frame image when currently the camera enters the wake-up state based on the first exposure value, the brightness difference ratio, and a correction coefficient value; and determining the exposure factor of the first frame image after the startup of the camera is completed based on the fifth exposure value.

8. The method for rapid exposure of camera of any of claims 1 to 3, wherein estimating the exposure factor of the first frame image after the startup of the camera is completed based on the brightnesses of the plurality frames of pre-alarm images cached by the camera during the sleep state comprises:

determining, when the camera starts, brightnesses of a preset quantity of pre-alarm images among the plurality frames of pre-alarm images cached by the camera during the sleep state;

calculating differences between the brightnesses of the preset quantity of pre-alarm images and the brightness of the first frame image after the startup of the camera is completed; and

determining an exposure factor of a first pre-alarm image in the preset quantity of pre-alarm images as the exposure factor of the first frame image after the startup of the camera is completed, wherein a difference between the brightness of the first pre-alarm image and the brightness of the first frame image after the startup of the camera is completed is less than a preset threshold.

9. The method for rapid exposure of camera of any of claims 1 to 3, wherein estimating the exposure factor of the first frame image after the startup of the camera is completed based on the brightnesses of the plurality frames of pre-alarm images cached by the camera during the sleep state comprises:
determining an exposure factor of a last frame pre-alarm image among the plurality frames of pre-alarm images cached by the camera during the sleep state as the exposure factor of the first frame image after the startup of the camera is completed, wherein the brightnesses of the plurality frames of pre-alarm images are adjusted based on an actual ambient brightness for exposure.

10. An apparatus for rapid exposure of camera, comprising:

an adjusting module, configured to adjust an image acquisition frequency and an image acquisition resolution based on a distance to and a volume of a measured object in case that a camera is in a sleep state;
a cache module directly connected to an output terminal of a sensing unit in a camera through an A/D converter, and configured to cache images acquired by the sensing unit in the sleep state;
a cache control module, configured to control the sensing unit in the camera to acquire pre-alarm images using an adjusted image acquisition frequency and image acquisition resolution, and output the pre-alarm images to the cache module;
an estimating module, configured to estimate a brightness and an exposure factor of a first frame image after startup of the camera is completed based on brightnesses of a plurality frames of pre-alarm images cached by the camera during the sleep state; and
an exposing module, configured to control the camera to expose, after the startup is completed, based on the estimated brightness and exposure factor of the first frame image after the startup of the camera is completed.

11. An electronic device, comprising a memory, a processor, and a computer program stored on the memory and executable on the processor, wherein the processor, when executing the program, performs the steps of the method for rapid exposure of camera of any of claims 1 to 9.

12. A non-transient computer-readable storage medium, storing a computer program, wherein the computer program, when executed by a processor, performs the steps of the method for rapid exposure of camera of any of claims 1 to 9.

```
┌─────────────────────────────────────────────────────────────┐
│  Adjusting an image acquisition frequency and an image        │         101
│  acquisition resolution based on a distance to and a volume   │  ⌐⌐⌐
│  of a measured object in case that a camera is in a sleep     │
│  state                                                        │
└─────────────────────────────────────────────────────────────┘
                              │
                              ▼
┌─────────────────────────────────────────────────────────────┐
│  Controlling a sensing unit in the camera to acquire and      │         102
│  cache pre-alarm images using the adjusted image acquisition  │  ⌐⌐⌐
│  frequency and image acquisition resolution                   │
└─────────────────────────────────────────────────────────────┘
                              │
                              ▼
┌─────────────────────────────────────────────────────────────┐
│  Estimating a brightness and an exposure factor of a first    │         103
│  frame image after startup of the camera is completed based   │  ⌐⌐⌐
│  on brightnesses of a plurality frames of pre-alarm images    │
│  cached by the camera during the sleep state                  │
└─────────────────────────────────────────────────────────────┘
                              │
                              ▼
┌─────────────────────────────────────────────────────────────┐
│  Controlling the camera to expose, after the startup is       │         104
│  completed, based on the estimated brightness and exposure    │  ⌐⌐⌐
│  factor of the first frame image after the startup of the     │
│  camera is completed                                          │
└─────────────────────────────────────────────────────────────┘
```

FIG. 1

Apparatus for camera rapid exposure

10

20

30

Adjusting module — Cache module — Cache control module

50

40

Exposing module — Estimating module

FIG. 2

Electronic
device

310

330

Processor

Memory

Communication bus

340

320

Communication
interface

FIG. 3

# EP 4 583 526 A1

## INTERNATIONAL SEARCH REPORT

| | International application No. |
|---|---|
| | **PCT/CN2023/104418** |

**A. CLASSIFICATION OF SUBJECT MATTER**

H04N23/70(2023.01)i; H04N23/60(2023.01)i; H04N7/18(2006.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, DWPI, USTXT, EPTXT, JPTXT, WOTXT, CNKI, IEEE: 相机, 摄像头, 休眠, 待机, 熄屏, 启动, 唤醒, 距离, 间距, 物距, 尺寸, 体积, 比例, 占比, 深度, 调整, 调节, 分辨率, 频率, 帧率, 帧速率, 帧数, 亮度, 曝光, 首帧, 第一帧, 初始, 功耗, 耗电, camera, dormant, sleep, start, awake, distance, adjust, frame rate, resolution, exposure, first frame, low power, luminance.

**C. DOCUMENTS CONSIDERED TO BE RELEVANT**

| Category* | Citation of document, with indication, where appropriate, of the relevant passages | Relevant to claim No. |
|---|---|---|
| Y | CN 106506960 A (VIVO COMMUNICATION TECHNOLOGY CO., LTD.) 15 March 2017 (2017-03-15) <br> description, paragraphs [0049]-[0151], and figures 2-7 | 1-3, 8-12 |
| Y | CN 106558121 A (ZTE CORP.) 05 April 2017 (2017-04-05) <br> description, paragraphs [0034]-[0042], and figure 1 | 1-3, 8-12 |
| Y | KR 101874489 B1 (SEJONG INDUSTRIAL CO., LTD.) 04 July 2018 (2018-07-04) <br> description, paragraphs [0019]-[0037], and figures 1-3 | 1-3, 8-12 |
| A | CN 109033913 A (VIVO COMMUNICATION TECHNOLOGY CO., LTD.) 18 December 2018 (2018-12-18) <br> entire document | 1-12 |
| A | CN 111669700 A (ZHUHAI GREE ELECTRIC APPLIANCES INC. et al.) 15 September 2020 (2020-09-15) <br> entire document | 1-12 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 September 2023** | **24 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/104418**

| Patent document cited in search report | | | Publication date (day/month/year) | Patent family member(s) | | | Publication date (day/month/year) |
|---|---|---|---|---|---|---|---|
| CN | 106506960 | A | 15 March 2017 | CN | 106506960 | B | 07 June 2019 |
| CN | 106558121 | A | 05 April 2017 | WO | 2016131310 | A1 | 25 August 2016 |
| KR | 101874489 | B1 | 04 July 2018 | | None | | |
| CN | 109033913 | A | 18 December 2018 | | None | | |
| CN | 111669700 | A | 15 September 2020 | CN | 111669700 | B | 21 September 2021 |

Form PCT/ISA/210 (patent family annex) (July 2022)

**REFERENCES CITED IN THE DESCRIPTION**

**Patent documents cited in the description**

- CN 2022110739480